# EUROPEAN PATENT SPECIFICATION

(11) **EP 3 959 964 B1**
(45) Date of publication and mention of the grant of the patent: **04.03.2026**
(21) Application number: 21191136.7
(22) Date of filing: 12.08.2021
(51) Int. Cl.: A01F 15/08

(54) **AUTOMATED BALER PICKUP CONTROL BASED ON WINDROW DETECTION**
AUTOMATISCHE STEUERUNG DER BALLENPRESSENAUFNAHME AUF DER GRUNDLAGE DER SCHWADENERKENNUNG
COMMANDE AUTOMATIQUE DE PICKUP DE PRESSE À BALLES BASÉE SUR LA DÉTECTION D'ANDAIN

(30) Priority: 27.08.2020 US 202063071098 P
(43) Date of publication of application: 02.03.2022
(73) Proprietor: AGCO Corporation, Duluth, GA 30096 (US)
(72) Inventor: GOOD, Grant Lewis, Hesston, 67062-0969 (US); KENDRICK, Patrick, Hesston, 67060-0969 (US); BUSENITZ, Brian, Hesston, 67062-0969 (US); HAMILTON, Kevin J, Hesston, 67062-0969 (US)
(74) Representative: AGCO Intellectual Property Department

(56) References cited:
- WO-A1-2018/206677
- US-A1- 2014 208 708
- US-A1- 2016 278 294
- US-B2- 9 468 147

## Description

### FIELD OF THE INVENTION

Embodiments of the current invention relate to systems and methods for controlling a position of a baler pickup based on detection of a windrow.

### BACKGROUND

Balers, or hay balers, are machines that gather and compress a cut fodder crop, such as hay, cotton, flax straw, salt marsh hay, or silage, into a compact and manageable bale that is either rectangular box shaped or cylindrical shaped. After the fodder crop is cut, and before it is baled, it is usually left on the ground in a field in a plurality of elongated, relatively narrow windrows. Balers typically include a pickup located at their front end which have rotors and tines or other components to gather up the crop in the windrows and feed it to a compressor which compresses the cut crop before tying it and ejecting it. The pickup may include a mechanism which allows it to be raised when the baler is not gathering and compressing the crop. This allows the pickup to avoid picking up debris or crops from windrows that the baler is passing over. It also allows the pickup to avoid damage from rocks or other obstacles. The pickup is lowered when a windrow is encountered where the crop needs to be baled. Typically, raising and lowering the pickup is a manual process performed by an operator who is often also driving a tractor pulling the baler. The problem is that the operator may be distracted and may not raise the pickup soon enough to avoid debris or obstacles and may not lower the pickup when an unbaled windrow is encountered.

US 9 469 147 B2 (CLAAS) D1 generally discloses a baling system that detects the presence of a windrow and automatically raises or lowers the crop pickup. D1 discloses waiting a "minimum period of time" after a change is detected before adjusting the crop pickup. The purpose of waiting this minimum period of time is to avoid moving the crop pickup in response to a "gap in the swath" rather than a true end-of-row condition.

### SUMMARY OF THE INVENTION

Embodiments of the current invention solve the above-mentioned problems and provide a distinct advance in the art of agricultural machinery control. Specifically, embodiments of the present invention provide a system according to claim 1 and a method according to claim 8 for controlling a position of a baler pickup based on detection of a windrow and a corresponding baler according to claim 9.

An embodiment of the system broadly comprises a sensor, a processing element, and a pickup pivot mechanism. The sensor is configured to monitor a ground area in front of the baler, sense a presence or an absence of a windrow in front of the pickup, and output a sensor signal with a first level and/or data value indicating the presence of the windrow in front of the pickup and a second level and/or data value indicating the absence of the windrow in front of the pickup. The processing element is configured or programmed to receive the sensor signal, and output a pickup signal with a first level and/or data value to lower the pickup when the sensor signal has the first level and/or data value and a second level and/or data value to raise the pickup when the sensor signal has the second level and/or data value. The pickup pivot mechanism is configured to receive the pickup signal, lower the pickup when the pickup signal has the first value, and raise the pickup when the pickup signal has the second value. According to the invention, the processing element is further configured or programmed to change the pickup signal from one level and/or data value to the other level and/or data value at a time period after the sensor signal has changed from one level and/or data value to the other level and/or data value, the time period varying according to a ground speed of the baler and a distance between the ground area monitored by the sensor and the pickup.

A method broadly comprises monitoring a ground area in front of the baler; determining a presence or an absence of a windrow in front of the pickup; lowering the pickup when the windrow is sensed to be present; raising the pickup when the windrow is sensed to be absent; determining a change in the windrow; and changing a position of the pickup at a time period after the determined change in the windrow, the time period varying according to a ground speed of the baler and a distance between the pickup and the ground area in front of the baler. The time period varies according to the distance between the ground area monitored by the sensor and the pickup divided by the ground speed of the baler.

Determining the presence or an absence of a windrow may be performed in part by a lidar transceiver, a radar transceiver, a video camera, a photographic camera, or an ultrasonic transceiver.

Another embodiment of the current invention provides a baler comprising a pickup, a sensor, a processing element, and a pickup pivot mechanism. The pickup is configured to receive a cut crop to be compressed into a plurality of bales. The sensor is configured to monitor a ground area in front of the baler, sense a presence or an absence of a windrow in front of the pickup, and output a sensor signal with a first level and/or data value indicating the presence of the windrow in front of the pickup and a second level and/or data value indicating the absence of the windrow in front of the pickup. The processing element is configured or programmed to receive the sensor signal, and output a pickup signal with a first level and/or data value to lower the pickup when the sensor signal has the first level and/or data value and a second level and/or data value to raise the pickup when the sensor signal has the second level and/or data value. The pickup pivot mechanism is configured to receive the pickup signal, lower the pickup when the pickup signal has the first value, and raise the pickup when the pickup signal has the second value. According to the invention, the processing element is further configured or programmed to change the pickup signal from one level and/or data value to the other level and/or data value at a time period after the sensor signal has changed from one level and/or data value to the other level and/or data value, the time period varying according to a ground speed of the baler and a distance between the ground area monitored by the sensor and the pickup.

This summary is provided to introduce a selection of concepts in a simplified form that are further described below in the detailed description. This summary is not intended to identify key features or essential features of the claimed subject matter, nor is it intended to be used to limit the scope of the claimed subject matter. Other aspects and advantages of the current invention will be apparent from the following detailed description of the embodiments and the accompanying drawing figures.

### BRIEF DESCRIPTION OF THE DRAWING FIGURES

Embodiments of the current invention are described in detail below with reference to the attached drawing figures, wherein:
Fig. 1 is an overhead environmental view of a field including a plurality of windrows where a tractor is pulling a baler including a system, constructed in accordance with various embodiments of the current invention, for controlling a position of a pickup of the baler while the baler is baling the crop in the windrows;
Fig. 2 is a side view of the tractor and the baler;
Fig. 3 is a schematic block diagram of various electronic components of the system; and
Fig. 4 is a listing of at least a portion of the steps of a method for controlling the position of the pickup of the baler.

The drawing figures do not limit the current invention to the specific embodiments disclosed and described herein. The drawings are not necessarily to scale, emphasis instead being placed upon clearly illustrating the principles of the invention.

### DETAILED DESCRIPTION OF THE EMBODIMENTS

The following detailed description of the technology references the accompanying drawings that illustrate specific embodiments in which the technology can be practiced. The embodiments are intended to describe aspects of the technology in sufficient detail to enable those skilled in the art to practice the technology. Other embodiments can be utilized and changes can be made without departing from the scope of the current invention as set forth in the appended claims. The following detailed description is, therefore, not to be taken in a limiting sense. The scope of the current invention is defined only by the appended claims.

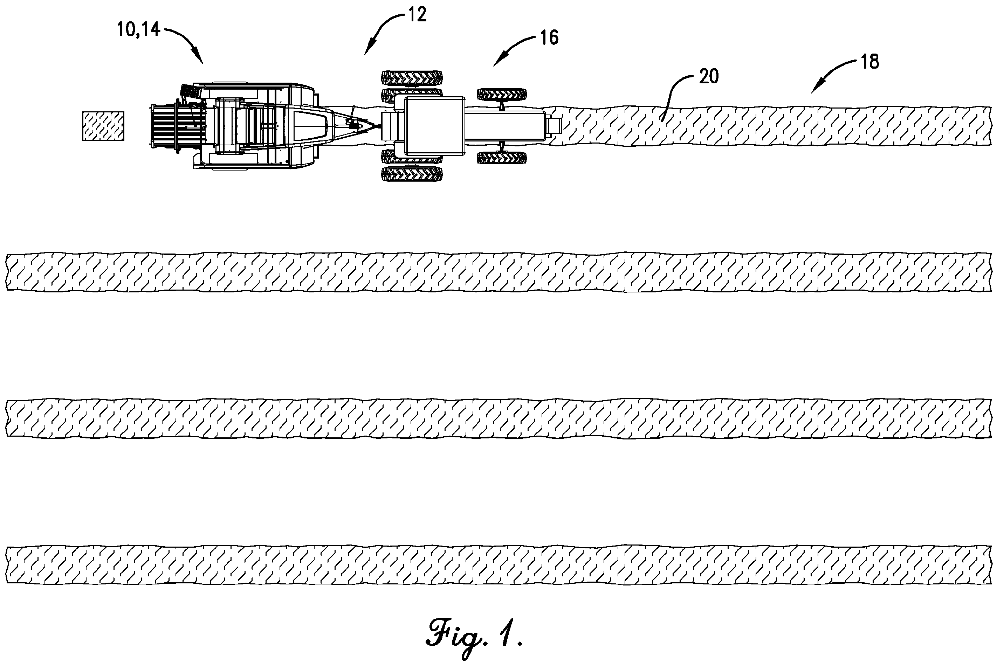

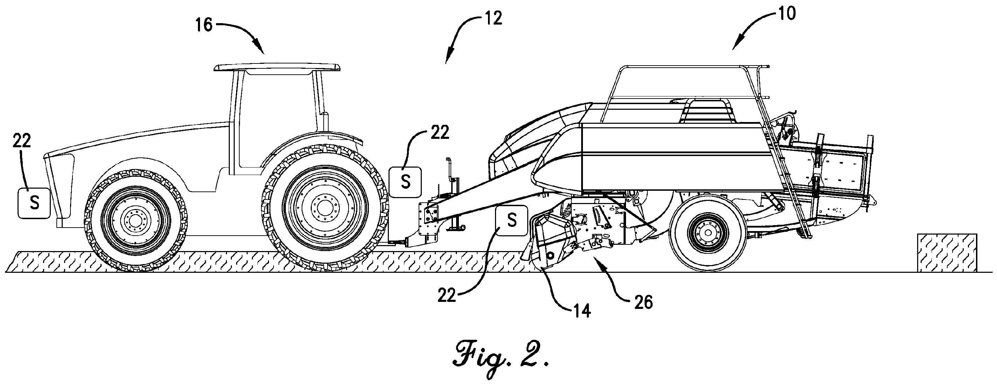

A baler 10 including a system 12, constructed in accordance with various embodiments of the current invention, for controlling a position of a pickup 14 of the baler 10 is shown in Figs. 1 and 2. The baler 10 is pulled by a tractor 16 over a windrow 18 of a cut crop 20 while the baler 10 performs the process of baling the cut crop 20, i.e., collecting, compressing, and tying it. The cut crop 20 may include hay, cotton, flax straw, salt marsh hay, or silage.

The baler 10 may be a "round" baler, which produces cylindrically shaped bales, or a large or small "square" baler, which produces rectangular bales such as the ones shown in Fig. 2. The pickup 14 of the baler 10 may include a plurality of outward-extending tines attached to a rotating cylinder. The tines contact and grab the cut crop 20 from the windrow 18. The gathered crop 20 is then fed, or passed, from the pickup 14 to other components of the baler 10 which compress and tie the crop 20 into a bale.

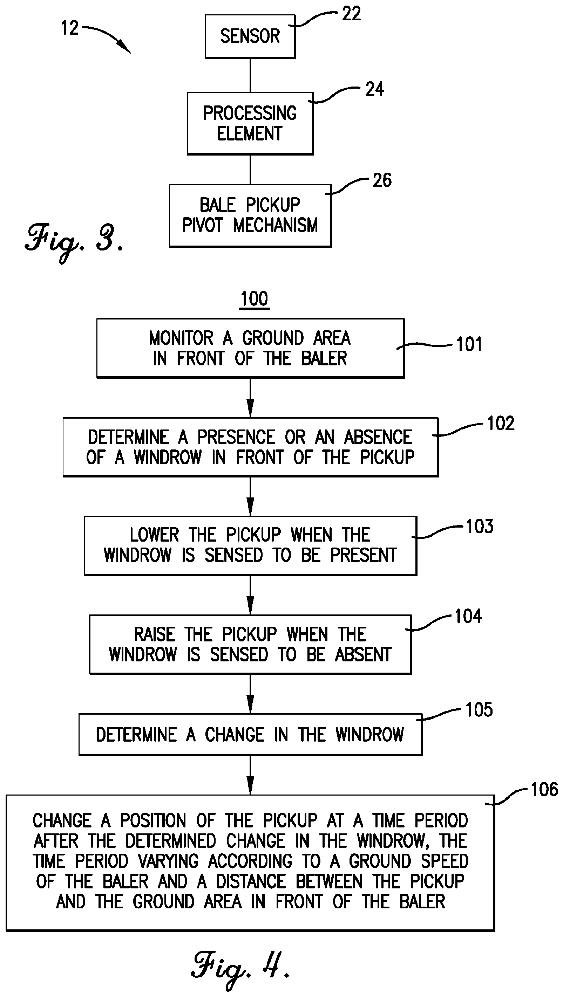

The system 12, as shown in Fig. 3, broadly comprises a sensor 22, a processing element 24, and a pickup pivot mechanism 26. The sensor 22 generally monitors a ground area in front of the baler 10 and senses a presence or absence of the windrow 18. Typically, the sensor 22 senses the presence of the windrow 18 widthwise, or looking axially along the windrow 18, as opposed to lengthwise, or looking transverse at the windrow 18. The sensor 22 may include radio frequency transceivers such as radar transceivers, laser light transceivers such as lidar transceivers, video imaging or photograph imaging cameras, or other non-contact devices, such as ultrasonic transceivers, or combinations thereof, that can sense the presence or absence of the windrow 18. The sensor 22 (indicated as a plurality of boxes with an "S" in Fig. 2) may be positioned in at least one of the following locations: on the front of the tractor 16, on the rear of the tractor 16, or on the front of the baler 10 such that the sensor 22 has an unobstructed view of the ground in front of the baler 10. The sensor 22 may further include signal or data processing components that process the radar, lidar, video, photographic, or ultrasonic data and determine whether the windrow 18 is present or absent. The sensor 22 outputs an electronic sensor signal and/or data that includes a level and/or value that varies according to the presence or absence of the windrow 18. For example, the sensor signal may have a first level and/or data value when the sensor 22 determines that the windrow 18 is present. And, the sensor signal may have a second level and/or data value when the sensor 22 determines that the windrow 18 is absent. Alternatively, the sensor 22 may output the sensor signal and/or data that varies according to the ground area in front of the baler 10 and includes a radar, lidar, video, photographic, or ultrasonic representation of the ground in front of the baler 10 without processing to determine whether the windrow 18 is present or absent.

The processing element 24 may comprise one or more processors. The processing element 24 may include electronic hardware components such as microprocessors (single-core or multi-core), microcontrollers, digital signal processors (DSPs), field-programmable gate arrays (FPGAs), analog and/or digital application-specific integrated circuits (ASICs), or the like, or combinations thereof. The processing element 24 may generally execute, process, or run instructions, code, code segments, code statements, software, firmware, programs, applications, apps, processes, services, daemons, or the like. The processing element 24 may also include hardware components such as registers, finite-state machines, sequential and combinational logic, configurable logic blocks, and other electronic circuits that can perform the functions necessary for the operation of the current invention. In certain embodiments, the processing element 24 may include multiple computational components and functional blocks that are packaged separately but function as a single unit. The processing element 24 may be in electronic communication with the other electronic components through serial or parallel links that include universal busses, address busses, data busses, control lines, and the like.

The processing element 24 may further comprise or be in electronic communication with a memory element. The memory element may be embodied by devices or components that store data in general, and digital or binary data in particular, and may include exemplary electronic hardware data storage devices or components such as read-only memory (ROM), programmable ROM, erasable programmable ROM, random-access memory (RAM) such as static RAM (SRAM) or dynamic RAM (DRAM), cache memory, hard disks, floppy disks, optical disks, flash memory, thumb drives, universal serial bus (USB) drives, or the like, or combinations thereof. In some embodiments, the memory element may be embedded in, or packaged in the same package as, the processing element 24. The memory element may include, or may constitute, a non-transitory "computer-readable medium". The memory element may store the instructions, code, code statements, code segments, software, firmware, programs, applications, apps, services, daemons, or the like that are executed by the processing element 24. The memory element may also store data that is received by the processing element 24 or the device in which the processing element 24 is implemented. The processing element 24 may further store data or intermediate results generated during processing, calculations, and/or computations as well as data or final results after processing, calculations, and/or computations. In addition, the memory element may store settings, data, documents, sound files, photographs, movies, images, databases, and the like.

The processing element 24 may be operable, configured, or programmed to perform the following functions by utilizing hardware, software, firmware, or combinations thereof. The processing element 24 receives the sensor signal from the sensor 22. If the sensor 22 determines whether the windrow 18 is present or absent and the sensor signal includes the first level and/or data value indicating that the windrow 18 is present and the second level and/or data value indicating that the windrow 18 is absent, then the processing element 24 generates and communicates an electronic pickup signal to the pickup pivot mechanism 26. The pickup signal has a level and/or data value that varies, at least in part, according to the level and/or data value of the sensor signal. In general, if the sensor signal includes the first level and/or data value (indicating the windrow 18 is present), then the processing element 24 generates and communicates the pickup signal with the first level and/or data value (to lower the pickup 14). If the sensor signal includes the second level and/or data value (indicating the windrow 18 is absent), then the processing element 24 generates and communicates the pickup signal with the second level and/or data value (to raise the pickup 14).

The processing element 24 may also receive, or have knowledge of, data regarding the ground speed of the tractor 16 and/or baler 10. Furthermore, the processing element 24 may have knowledge of the position of the sensor 22, or more specifically, a distance between the ground area monitored by the sensor 22 and the pickup 14. Thus, when the sensor signal changes from one level and/or data value to the other level and/or data value, the processing element 24 generates and communicates the pickup signal with a change from one level and/or data value to the other level and/or data value based on the ground speed of the tractor 16 and/or baler 10 and the position of the sensor 22. For example, when the sensor signal changes from the first level and/or data value to the second level and/or data value (i.e., the end of the windrow 18), the processing element 24 generates and communicates the pickup signal with a change from the first level and/or data value to the second level and/or data value based on the ground speed of the tractor 16 and/or baler 10 and the position of the sensor 22. According to the invention, the processing element 24 generates and communicates the pickup signal with a change from the first level and/or data value to the second level and/or data value at a time period after the sensor signal changes from the first level and/or data value to the second level and/or data value. The processing element 24 may determine the time period as varying according to, or as proportional to, the distance between the ground area monitored by the sensor 22 and the pickup 14 divided by the ground speed of the tractor 16 and/or baler 10.

In addition, when the sensor signal changes from the second level and/or data value to the first level and/or data value (i.e., the beginning of the windrow 18), the processing element 24 generates and communicates the pickup signal with a change from the second level and/or data value to the first level and/or data value based on the ground speed of the tractor 16 and/or baler 10 and the position of the sensor 22. And, the time period between the change of the sensor signal from the second level and/or data value to the first level and/or data value and the change of the pickup signal from the second level and/or data value to the first level and/or data value may vary according to, or be proportional to, the distance between the ground area monitored by the sensor 22 and the pickup 14 divided by the ground speed of the tractor 16 and/or baler 10.

If the sensor 22 does not determine whether the windrow 18 is present or absent and the sensor signal and/or data includes a radar, lidar, video, photographic, or ultrasonic representation of the ground in front of the baler 10, then the processing element 24 processes or analyzes the signal and/or data and determines whether the windrow 18 is present or absent. When the processing element 24 determines the presence or absence of the windrow 18, then the processing element 24 generates and communicates the pickup signal to the pickup pivot mechanism 26 in the same fashion as described above. That is, when the processing element 24 determines the windrow 18 is present, then the processing element 24 generates and communicates the pickup signal with the first level and/or data value. When the processing element 24 determines the windrow 18 is absent, then the processing element 24 generates and communicates the pickup signal with the second level and/or data value. Furthermore, when the processing element 24 determines a change in the windrow 18, then the processing element 24 generates and communicates a change in the pickup signal at a time period after the determined change in the windrow 18 based on the ground speed of the tractor 16 and/or baler 10 and the position of the sensor 22 as described above.

The pickup pivot mechanism 26 generally pivots the pickup 14 in order to raise or lower it. The pickup pivot mechanism 26 may include motors, actuators, or the like which provide rotational or translational motion to raise and lower the pickup 14. The pickup pivot mechanism 26 may also include electronic circuitry, such as electric power supplies, electric power converters, amplifiers, filters, switches, and the like which control the mechanical components. The pickup pivot mechanism 26 receives the pickup signal adjusts the position of the pickup 14 accordingly. That is, if the pickup signal has the first level and/or data value, then the pickup pivot mechanism 26 lowers the pickup 14. If the pickup signal has the second level and/or data value, then the pickup pivot mechanism 26 raises the pickup 14.

Fig. 4 depicts a listing of at least a portion of the steps of an exemplary method 100 for controlling a position of a pickup 14 of the baler 10. The steps may be performed in the order shown in Fig. 4, or they may be performed in a different order. Furthermore, some steps may be performed concurrently as opposed to sequentially. In addition, some steps may be optional or may not be performed.

Referring to step 101, a ground area in front of the baler 10 is monitored. The ground area is monitored by a sensor 22. The sensor 22 may include radio frequency transceivers such as radar transceivers, laser light transceivers such as lidar transceivers, video imaging or photograph imaging cameras, or other non-contact devices, such as ultrasonic transceivers, or combinations thereof, that can sense the presence or absence of a windrow 18.

Referring to step 102, a presence or an absence of the windrow in front of the pickup 14 is determined. The sensor 22 may further include signal or data processing components that process the radar, lidar, video, photographic, or ultrasonic data and determine whether the windrow 18 is present or absent. The sensor 22 may output an electronic sensor signal and/or data that includes a level and/or value that varies according to the presence or absence of the windrow 18. For example, the sensor signal may have a first level and/or data value when the sensor 22 determines that the windrow 18 is present. And, the sensor signal may have a second level and/or data value when the sensor 22 determines that the windrow 18 is absent.

Referring to step 103, the pickup 14 is lowered when the windrow 18 is sensed to be present. A processing element 24 receives the sensor signal from the sensor 22. The processing element 24 generates and communicates an electronic pickup signal to a pickup pivot mechanism 26 which pivots the pickup 14 in order to raise or lower it. The pickup signal has a level and/or data value that varies, at least in part, according to the level and/or data value of the sensor signal. In general, if the sensor signal includes the first level and/or data value (indicating the windrow 18 is present), then the processing element 24 generates and communicates the pickup signal with the first level and/or data value (to lower the pickup 14). Receiving the pickup signal with the first level and/or data value, the pickup pivot mechanism 26 lowers the pickup 14.

Referring to step 104, the pickup 14 is raised when the windrow 18 is sensed to be absent. If the sensor signal includes the second level and/or data value (indicating the windrow 18 is absent), then the processing element 24 generates and communicates the pickup signal with the second level and/or data value (to raise the pickup 14). Receiving the pickup signal with the second level and/or data value, the pickup pivot mechanism 26 raises the pickup 14.

Referring to step 105, a change in the windrow 18 is determined. The change occurs at either the beginning or the end of the windrow 18.

Referring to step 106, a position of the pickup 14 is changed at a time period after the determined change in the windrow 18, the time period varying according to a ground speed of the baler 10 and a distance between the pickup 14 and the ground area in front of the baler 10. The processing element 24 may also receive, or have knowledge of, data regarding the ground speed of the tractor 16 and/or baler 10. Furthermore, the processing element 24 may have knowledge of the position of the sensor 22, or more specifically, a distance between the ground area monitored by the sensor 22 and the pickup 14. Thus, when the sensor signal changes from one level and/or data value to the other level and/or data value, the processing element 24 generates and communicates the pickup signal with a change from one level and/or data value to the other level and/or data value based on the ground speed of the tractor 16 and/or baler 10 and the position of the sensor 22. For example, when the sensor signal changes from the first level and/or data value to the second level and/or data value (i.e., the end of the windrow 18), the processing element 24 generates and communicates the pickup signal with a change from the first level and/or data value to the second level and/or data value based on the ground speed of the tractor 16 and/or baler 10 and the position of the sensor 22. In some embodiments, the processing element 24 may generate and communicate the pickup signal with a change from the first level and/or data value to the second level and/or data value at a time period after the sensor signal changes from the first level and/or data value to the second level and/or data value. The processing element 24 may determine the time period as varying according to, or as proportional to, the distance between the ground area monitored by the sensor 22 and the pickup 14 divided by the ground speed of the tractor 16 and/or baler 10.

In addition, when the sensor signal changes from the second level and/or data value to the first level and/or data value (i.e., the beginning of the windrow 18), the processing element 24 generates and communicates the pickup signal with a change from the second level and/or data value to the first level and/or data value based on the ground speed of the tractor 16 and/or baler 10 and the position of the sensor 22. And, the time period between the change of the sensor signal from the second level and/or data value to the first level and/or data value and the change of the pickup signal from the second level and/or data value to the first level and/or data value may vary according to, or be proportional to, the distance between the ground area monitored by the sensor 22 and the pickup 14 divided by the ground speed of the tractor 16 and/or baler 10.

Receiving the pickup signal with the first level and/or data value, the pickup pivot mechanism 26 lowers the pickup 14. Receiving the pickup signal with the second level and/or data value, the pickup pivot mechanism 26 raises the pickup 14.

### ADDITIONAL CONSIDERATIONS

Throughout this specification, references to "one embodiment", "an embodiment", or "embodiments" mean that the feature or features being referred to are included in at least one embodiment of the technology. Separate references to "one embodiment", "an embodiment", or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments, but is not necessarily included. Thus, the current invention can include a variety of combinations and/or integrations of the embodiments described herein.

Although the present application sets forth a detailed description of numerous different embodiments, it should be understood that the legal scope of the description is defined by the words of the claims set forth at the end of this patent and equivalents. The detailed description is to be construed as exemplary only and does not describe every possible embodiment since describing every possible embodiment would be impractical. Numerous alternative embodiments may be implemented, using either current technology or technology developed after the filing date of this patent, which would still fall within the scope of the claims.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements may fall within the scope of the subject matter as set out in the appended claims.

Certain embodiments are described herein as including logic or a number of routines, subroutines, applications, or instructions. These may constitute either software (e.g., code embodied on a machine-readable medium or in a transmission signal) or hardware. In hardware, the routines, etc., are tangible units capable of performing certain operations and may be configured or arranged in a certain manner. In example embodiments, one or more computer systems (e.g., a standalone, client or server computer system) or one or more hardware modules of a computer system (e.g., a processor or a group of processors) may be configured by software (e.g., an application or application portion) as computer hardware that operates to perform certain operations as described herein.

In various embodiments, computer hardware, such as a processing element, may be implemented as special purpose or as general purpose. For example, the processing element may comprise dedicated circuitry or logic that is permanently configured, such as an application-specific integrated circuit (ASIC), or indefinitely configured, such as an FPGA, to perform certain operations. The processing element may also comprise programmable logic or circuitry (e.g., as encompassed within a general-purpose processor or other programmable processor) that is temporarily configured by software to perform certain operations. It will be appreciated that the decision to implement the processing element as special purpose, in dedicated and permanently configured circuitry, or as general purpose (e.g., configured by software) may be driven by cost and time considerations.

Accordingly, the term "processing element" or equivalents should be understood to encompass a tangible entity, be that an entity that is physically constructed, permanently configured (e.g., hardwired), or temporarily configured (e.g., programmed) to operate in a certain manner or to perform certain operations described herein. Considering embodiments in which the processing element is temporarily configured (e.g., programmed), each of the processing elements need not be configured or instantiated at any one instance in time. For example, where the processing element comprises a general-purpose processor configured using software, the general-purpose processor may be configured as respective different processing elements at different times. Software may accordingly configure the processing element to constitute a particular hardware configuration at one instance of time and to constitute a different hardware configuration at a different instance of time.

Computer hardware components, such as communication elements, memory elements, processing elements, and the like, may provide information to, and receive information from, other computer hardware components. Accordingly, the described computer hardware components may be regarded as being communicatively coupled. Where multiple of such computer hardware components exist contemporaneously, communications may be achieved through signal transmission (e.g., over appropriate circuits and buses) that connect the computer hardware components. In embodiments in which multiple computer hardware components are configured or instantiated at different times, communications between such computer hardware components may be achieved, for example, through the storage and retrieval of information in memory structures to which the multiple computer hardware components have access. For example, one computer hardware component may perform an operation and store the output of that operation in a memory device to which it is communicatively coupled. A further computer hardware component may then, at a later time, access the memory device to retrieve and process the stored output. Computer hardware components may also initiate communications with input or output devices, and may operate on a resource (e.g., a collection of information).

The various operations of example methods described herein may be performed, at least partially, by one or more processing elements that are temporarily configured (e.g., by software) or permanently configured to perform the relevant operations. Whether temporarily or permanently configured, such processing elements may constitute processing element-implemented modules that operate to perform one or more operations or functions. The modules referred to herein may, in some example embodiments, comprise processing element-implemented modules.

Similarly, the methods or routines described herein may be at least partially processing element-implemented. For example, at least some of the operations of a method may be performed by one or more processing elements or processing element-implemented hardware modules. The performance of certain of the operations may be distributed among the one or more processing elements, not only residing within a single machine, but deployed across a number of machines. In some example embodiments, the processing elements may be located in a single location (e.g., within a home environment, an office environment or as a server farm), while in other embodiments the processing elements may be distributed across a number of locations.

Unless specifically stated otherwise, discussions herein using words such as "processing," "computing," "calculating," "determining," "presenting," "displaying," or the like may refer to actions or processes of a machine (e.g., a computer with a processing element and other computer hardware components) that manipulates or transforms data represented as physical (e.g., electronic, magnetic, or optical) quantities within one or more memories (e.g., volatile memory, non-volatile memory, or a combination thereof), registers, or other machine components that receive, store, transmit, or display information.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus.

Although the technology has been described with reference to the embodiments illustrated in the attached drawing figures, it is noted that equivalents may be employed and substitutions made herein without departing from the scope of the appended claims.

## Claims

1. A system for controlling a position of a pickup (14) on a baler (10), the system comprising:
a sensor (22) configured to monitor a ground area in front of the baler (10), sense a presence or an absence of a windrow in front of the pickup (14), and output a sensor signal with a first level and/or data value indicating the presence of the windrow in front of the pickup (14) and a second level and/or data value indicating the absence of the windrow in front of the pickup (14);
a processing element (24) configured or programmed to
receive the sensor signal, and
output a pickup signal with a first level and/or data value to lower the pickup (14) when the sensor signal has the first level and/or data value and a second level and/or data value to raise the pickup (14) when the sensor signal has the second level and/or data value; and
a pickup pivot mechanism (26) configured to receive the pickup signal, lower the pickup (14) when the pickup signal has the first value, and raise the pickup (14) when the pickup signal has the second value, the processing element (24) being further configured or programmed to change the pickup signal from one level and/or data value to the other level and/or data value at a time period after the sensor signal has changed from one level and/or data value to the other level and/or data value,
**characterised in that** the time period varies according to a ground speed of the baler (10) and a distance between the ground area monitored by the sensor (22) and the pickup (14).

2. The system of claim 1, wherein the processing element (24) is further configured or programmed to determine the time period as varying according to the distance between the ground area monitored by the sensor (22) and the pickup (14) divided by the ground speed of the baler (10).

3. The system of claim 1, wherein the sensor (22) includes a lidar transceiver.

4. The system of claim 1, wherein the sensor (22) includes a radar transceiver.

5. The system of claim 1, wherein the sensor (22) includes a video camera.

6. The system of claim 1, wherein the sensor (22) includes a photographic camera.

7. The system of claim 1, wherein the sensor (22) includes an ultrasonic transceiver.

8. A method for controlling a position of a pickup (14) on a baler (10), the method comprising:
monitoring a ground area in front of the baler (10);
determining a presence or an absence of a windrow in front of the pickup (14);
lowering the pickup (14) when the windrow is sensed to be present;
raising the pickup (14) when the windrow is sensed to be absent;
determining a change in the windrow; and
changing a position of the pickup (14) at a time period after the determined change in the windrow,
**characterised in that** the time period varies according to a ground speed of the baler (10) and a distance between the pickup (14) and the ground area in front of the baler (10) wherein the time period varies according to the distance between the ground area monitored by the sensor (22) and the pickup (14) divided by the ground speed of the baler (10).

9. A baler (10) comprising:
a pickup (14) configured to receive a cut crop to be compressed into a plurality of bales;
a sensor (22) configured to monitor a ground area in front of the baler (10), sense a presence or an absence of a windrow in front of the pickup (14), and output a sensor signal with a first level and/or data value indicating the presence of the windrow in front of the pickup (14) and a second level and/or data value indicating the absence of the windrow in front of the pickup (14);
a processing element (24) configured or programmed to
receive the sensor signal, and
output a pickup signal with a first level and/or data value to lower the pickup (14) when the sensor signal has the first level and/or data value and a second level and/or data value to raise the pickup (14) when the sensor signal has the second level and/or data value; and
a pickup pivot mechanism (26) configured to receive the pickup signal, lower the pickup (14) when the pickup signal has the first value, and raise the pickup (14) when the pickup signal has the second value wherein the processing element (24) is further configured or programmed to change the pickup signal from one level and/or data value to the other level and/or data value at a time period after the sensor signal has changed from one level and/or data value to the other level and/or data value,
**characterised in that** the time period varies according to a ground speed of the baler (10) and a distance between the ground area monitored by the sensor (22) and the pickup (14).

10. The baler of claim 9, wherein the processing element (24) is further configured or programmed to determine the time period as varying according to the distance between the ground area monitored by the sensor (22) and the pickup (14) divided by the ground speed of the baler (10).

11. The baler of claim 9, wherein the sensor (22) includes a lidar transceiver, a radar transceiver, or an ultrasonic transceiver.

12. The baler of claim 9, wherein the sensor (22) includes a video camera or a photograhic camera.

## Patentansprüche

1. System zum Steuern einer Position eines Aufnehmers (14) an einer Ballenpresse (10), wobei das System Folgendes umfasst:
einen Sensor (22), der dazu ausgelegt ist, einen Bodenbereich vor der Ballenpresse (10) zu überwachen, ein Vorhandensein oder Nichtvorhandensein einer Schwade vor dem Aufnehmer (14) zu erfassen und ein Sensorsignal mit einem ersten Pegel und/oder Datenwert, der das Vorhandensein der Schwade vor dem Aufnehmer (14) angibt, und einem zweiten Pegel und/oder Datenwert, der das Nichtvorhandensein der Schwade vor dem Aufnehmer (14) angibt, auszugeben;
ein Verarbeitungselement (24), das ausgelegt oder programmiert ist zum
Empfangen des Sensorsignals, und
Ausgeben eines Aufnehmersignals mit einem ersten Pegel und/oder Datenwert, um den Aufnehmer (14) zu senken, wenn das Sensorsignal den ersten Pegel und/oder Datenwert aufweist, und einem zweiten Pegel und/oder Datenwert, um den Aufnehmer (14) anzuheben, wenn das Sensorsignal den zweiten Pegel und/oder Datenwert aufweist; und
einen Aufnehmerschwenkmechanismus (26), der dazu ausgelegt ist, das Aufnehmersignal zu empfangen, den Aufnehmer (14) zu senken, wenn das Aufnehmersignal den ersten Wert aufweist, und den Aufnehmer (14) anzuheben, wenn das Aufnehmersignal den zweiten Wert aufweist,
wobei das Verarbeitungselement (24) ferner dazu ausgelegt oder programmiert ist, das Aufnehmersignal von einem Pegel und/oder Datenwert zu dem anderen Pegel und/oder Datenwert zu einem Zeitraum zu ändern, nachdem sich das Sensorsignal von einem Pegel und/oder Datenwert zu dem anderen Pegel und/oder Datenwert geändert hat,
**dadurch gekennzeichnet, dass** der Zeitraum sich in Abhängigkeit von einer Bodengeschwindigkeit der Ballenpresse (10) und einem Abstand zwischen dem vom Sensor (22) überwachten Bodenbereich und dem Aufnehmer (14) ändert.

2. System nach Anspruch 1, wobei das Verarbeitungselement (24) ferner dazu ausgelegt oder programmiert ist, den Zeitraum gemäß dem Abstand zwischen dem durch den Sensor (22) überwachten Bodenbereich und dem Aufnehmer (14) geteilt durch die Bodengeschwindigkeit der Ballenpresse (10) als variierend zu bestimmen.

3. System nach Anspruch 1, wobei der Sensor (22) einen Lidar-Sendeempfänger beinhaltet.

4. System nach Anspruch 1, wobei der Sensor (22) einen Radar-Sendeempfänger beinhaltet.

5. System nach Anspruch 1, wobei der Sensor (22) eine Videokamera beinhaltet.

6. System nach Anspruch 1, wobei der Sensor (22) eine fotografische Kamera beinhaltet.

7. System nach Anspruch 1, wobei der Sensor (22) einen Ultraschall-Sendeempfänger beinhaltet.

8. Verfahren zum Steuern einer Position eines Aufnehmers (14) an einer Ballenpresse (10), wobei das Verfahren Folgendes umfasst:
Überwachen eines Bodenbereichs vor der Ballenpresse (10); Bestimmen eines Vorhandenseins oder Nichtvorhandenseins einer Schwade vor dem Aufnehmer (14);
Absenken des Aufnehmers (14), wenn die Schwade als vorhanden erfasst wird;
Anheben des Aufnehmers (14), wenn die Schwade als nicht vorhanden erfasst wird;
Bestimmen einer Änderung der Schwade; und
Ändern einer Position des Aufnehmers (14) zu einem Zeitraum nach der bestimmten Änderung der Schwade,
**dadurch gekennzeichnet, dass** der Zeitraum gemäß einer Bodengeschwindigkeit der Ballenpresse (10) und einem Abstand zwischen dem Aufnehmer (14) und dem Bodenbereich vor der Ballenpresse (10) variiert,
wobei der Zeitraum gemäß dem Abstand zwischen dem durch den Sensor (22) überwachten Bodenbereich und dem Aufnehmer (14) geteilt durch die Bodengeschwindigkeit der Ballenpresse (10) variiert.

9. Ballenpresse (10), die Folgendes umfasst:
einen Aufnehmer (14), der dazu ausgelegt ist, ein geschnittenes Erntegut aufzunehmen, das zu mehreren Ballen komprimiert werden soll;
einen Sensor (22), der dazu ausgelegt ist, einen Bodenbereich vor der Ballenpresse (10) zu überwachen, ein Vorhandensein oder Nichtvorhandensein einer Schwade vor dem Aufnehmer (14) zu erfassen und ein Sensorsignal mit einem ersten Pegel und/oder Datenwert, der das Vorhandensein der Schwade vor dem Aufnehmer (14) angibt, und einem zweiten Pegel und/oder Datenwert, der das Nichtvorhandensein der Schwade vor dem Aufnehmer (14) angibt, auszugeben;
ein Verarbeitungselement (24), das ausgelegt oder programmiert ist zum
Empfangen des Sensorsignals, und
Ausgeben eines Aufnehmersignals mit einem ersten Pegel und/oder Datenwert, um den Aufnehmer (14) zu senken, wenn das Sensorsignal den ersten Pegel und/oder Datenwert aufweist, und einem zweiten Pegel und/oder Datenwert, um den Aufnehmer (14) anzuheben, wenn das Sensorsignal den zweiten Pegel und/oder Datenwert aufweist; und
einen Aufnehmerschwenkmechanismus (26), der dazu ausgelegt ist, das Aufnehmersignal zu empfangen, den Aufnehmer (14) zu senken, wenn das Aufnehmersignal den ersten Wert aufweist, und den Aufnehmer (14) anzuheben, wenn das Aufnehmersignal den zweiten Wert aufweist,
wobei das Verarbeitungselement (24) ferner dazu ausgelegt oder programmiert ist, das Aufnehmersignal von einem Pegel und/oder Datenwert zu dem anderen Pegel und/oder Datenwert zu einem Zeitraum zu ändern, nachdem sich das Sensorsignal von einem Pegel und/oder Datenwert zu dem anderen Pegel und/oder Datenwert geändert hat,
**dadurch gekennzeichnet, dass** der Zeitraum sich in Abhängigkeit von einer Bodengeschwindigkeit der Ballenpresse (10) und einem Abstand zwischen dem vom Sensor (22) überwachten Bodenbereich und dem Aufnehmer (14) ändert.

10. Ballenpresse nach Anspruch 9, wobei das Verarbeitungselement (24) ferner dazu ausgelegt oder programmiert ist, den Zeitraum gemäß dem Abstand zwischen dem durch den Sensor (22) überwachten Bodenbereich und dem Aufnehmer (14) geteilt durch die Bodengeschwindigkeit der Ballenpresse (10) als variierend zu bestimmen.

11. Ballenpresse nach Anspruch 9, wobei der Sensor (22) einen Lidar-Sendeempfänger, einen Radar-Sendeempfänger oder einen Ultraschall-Sendeempfänger beinhaltet.

12. Ballenpresse nach Anspruch 9, wobei der Sensor (22) eine Videokamera oder eine fotografische Kamera beinhaltet.

## Revendications

1. Système permettant de commander la position d'un ramasseur (14) sur une presse à balles (10), le système comprenant :
un capteur (22), configuré pour surveiller une zone au sol devant la presse à balles (10), détecter la présence ou l'absence d'un andain devant le ramasseur (14), et émettre un signal de capteur avec un premier niveau et/ou une première valeur de données, indiquant la présence de l'andain devant le ramasseur (14), et un deuxième niveau et/ou une deuxième valeur de données, indiquant l'absence de l'andain devant le ramasseur (14) ;
un élément de traitement (24), configuré ou programmé pour
recevoir le signal de capteur, et
émettre un signal de ramasseur avec un premier niveau et/ou une première valeur de données, pour abaisser le ramasseur (14) lorsque le signal de capteur a le premier niveau et/ou la première valeur de données, et un deuxième niveau et/ou une deuxième valeur de données, pour relever le ramasseur (14) lorsque le signal de capteur a le deuxième niveau et/ou la deuxième valeur de données ; et
un mécanisme de pivotement de ramasseur (26), configuré pour recevoir le signal de ramasseur, abaisser le ramasseur (14) lorsque le signal de ramasseur a la première valeur, et relever le ramasseur (14) lorsque le signal de ramasseur a la deuxième valeur,
l'élément de traitement (24) étant en outre configuré ou programmé pour faire passer le signal de ramasseur d'un niveau et/ou d'une valeur de données à l'autre niveau et/ou à l'autre valeur de données à une période de temps après que le signal de capteur est passé d'un niveau et/ou d'une valeur de données à l'autre niveau et/ou à l'autre valeur de données,
**caractérisé en ce que** la période de temps varie en fonction de la vitesse au sol de la presse à balles (10) et de la distance entre la zone au sol surveillée par le capteur (22) et le ramasseur (14).

2. Système selon la revendication 1, dans lequel l'élément de traitement (24) est en outre configuré ou programmé pour déterminer la période de temps comme variant en fonction de la distance entre la zone au sol surveillée par le capteur (22) et le ramasseur (14) divisée par la vitesse au sol de la presse à balles (10).

3. Système selon la revendication 1, dans lequel le capteur (22) comprend un émetteur-récepteur lidar.

4. Système selon la revendication 1, dans lequel le capteur (22) comprend un émetteur-récepteur radar.

5. Système selon la revendication 1, dans lequel le capteur (22) comprend une caméra vidéo.

6. Système selon la revendication 1, dans lequel le capteur (22) comprend un appareil photographique.

7. Système selon la revendication 1, dans lequel le capteur (22) comprend un émetteur-récepteur à ultrasons.

8. Procédé permettant de commander la position d'un ramasseur (14) sur une presse à balles (10), le procédé comprenant :
la surveillance d'une zone au sol devant la presse à balles (10) ;
la détermination de la présence ou de l'absence d'un andain devant le ramasseur (14) ;
l'abaissement du ramasseur (14) lorsque la présence d'un andain est détectée ;
le relevage du ramasseur (14) lorsque l'absence d'un andain est détectée ;
la détermination d'un changement dans l'andain ; et
la modification de la position du ramasseur (14) à une période de temps après le changement déterminé dans l'andain,
**caractérisé en ce que** la période de temps varie en fonction de la vitesse au sol de la presse à balles (10) et de la distance entre le ramasseur (14) et la zone au sol devant la presse à balles (10),
la période de temps variant en fonction de la distance entre la zone au sol surveillée par le capteur (22) et le ramasseur (14) divisée par la vitesse au sol de la presse à balles (10).

9. Presse à balles (10) comprenant :
un ramasseur (14), configuré pour recevoir une récolte coupée destinée à être compressée en une pluralité de balles ;
un capteur (22), configuré pour surveiller une zone au sol devant la presse à balles (10), détecter la présence ou l'absence d'un andain devant le ramasseur (14), et émettre un signal de capteur avec un premier niveau et/ou une première valeur de données, indiquant la présence de l'andain devant le ramasseur (14), et un deuxième niveau et/ou une deuxième valeur de données, indiquant l'absence de l'andain devant le ramasseur (14) ;
un élément de traitement (24), configuré ou programmé pour
recevoir le signal de capteur, et
émettre un signal de ramasseur avec un premier niveau et/ou une première valeur de données, pour abaisser le ramasseur (14) lorsque le signal de capteur a le premier niveau et/ou la première valeur de données, et un deuxième niveau et/ou une deuxième valeur de données, pour relever le ramasseur (14) lorsque le signal de capteur a le deuxième niveau et/ou la deuxième valeur de données ; et
un mécanisme de pivotement de ramasseur (26), configuré pour recevoir le signal de ramasseur, abaisser le ramasseur (14) lorsque le signal de ramasseur a la première valeur, et relever le ramasseur (14) lorsque le signal de ramasseur a la deuxième valeur
l'élément de traitement (24) étant en outre configuré ou programmé pour changer le signal de ramasseur d'un niveau et/ou d'une valeur de données à l'autre niveau et/ou à l'autre valeur de données à une période de temps après que le signal de capteur est passé d'un niveau et/ou d'une valeur de données à l'autre niveau et/ou à l'autre valeur de données,
**caractérisé en ce que** la période de temps varie en fonction de la vitesse au sol de la presse à balles (10) et de la distance entre la zone au sol surveillée par le capteur (22) et le ramasseur (14).

10. Presse à balles selon la revendication 9, dans laquelle l'élément de traitement (24) est en outre configuré ou programmé pour déterminer la période de temps comme variant en fonction de la distance entre la zone au sol surveillée par le capteur (22) et le ramasseur (14) divisée par la vitesse au sol de la presse à balles (10).

11. Presse à balles selon la revendication 9, dans laquelle le capteur (22) comprend un émetteur-récepteur lidar, un émetteur-récepteur radar ou un émetteur-récepteur à ultrasons.

12. Presse à balles selon la revendication 9, dans laquelle le capteur (22) comprend une caméra vidéo ou un appareil photographique.
